# EUROPEAN PATENT APPLICATION

(11) **EP 4 789 881 A1**
(43) Date of publication of application: **12.08.2026**
(21) Application number: 26157010.5
(22) Date of filing: 06.02.2026
(51) Int. Cl.: B60G 9/02, B60G 11/27, B60G 17/052, B60G 21/055

(54) **IMPROVED SUSPENSION SYSTEM FOR A HEAVY VEHICLE**

(30) Priority: 07.02.2025 IT 202500002358
(71) Applicant: IVECO S.P.A., 10156 Torino (IT)
(72) Inventor: KONRAD, Christian, 10156 TORINO (IT)
(74) Representative: Studio Torta S.p.A.

(57) **Abstract**

Vehicle (1) comprising a frame (2) extending along a longitudinal axis (A) direction and a transversal axis (B) direction and at least one axle (4) and a suspension system (3) for connecting at least one axle (4) to frame (2), suspension system (3) comprising a plurality of elements operatively connecting an axle (4) to the frame (2), the vehicle (1) further comprising a lifting system (22) for lifting up/down the axle (4) along a vertical axis (C) direction, the lifting system (22) being integrated into the suspension system (3).

## Description

### CROSS-REFERENCE TO RELATED APPLICATIONS

This patent application claims priority from Italian patent application no. 102025000002358 filed on February 7, 2025, the entire disclosure of which is incorporated herein by reference.

### TECHNICAL FIELD

The present invention relates to a lifting system for a suspension system, in particular a suspension system for a heavy vehicle suspension system.

### BACKGROUND OF THE INVENTION

Heavy vehicles such road transport vehicles, e.g. trucks, comprise axles that are suspended with respect to the frame in order to avoid excessive transmission of loads to the vehicle body.

Indeed, due to the asperities/shape of the road, wheels would move and transfer loads to the axles that need to be dampened in order to avoid excessive loads to reach the frame.

To this aim, different typologies of suspension systems are present. The most known layouts comprise essentially at least one between elastic elements, connection elements, damping means operationally interposed between the axle and the frame.

It is furthermore known the need of lifting up axles in some conditions, in particular when the vehicle is at low load, thereby allowing the division of the weight on a smaller number of axles.

Indeed, the tool of some routes depends on the number of axles and therefore, both in order to avoid extra-costs and in order to limit wear of such axles, it is known to provide lifting system to lift up axles.

Lifting systems usually use bulky lift springs, such as air springs that are controlled to move up or down the axle by being inflated or deflated. Such lift springs, other than being bulky, are positioned in a manner that drastically limits the useful space for the suspension elements.

Moreover, since vehicles tend more and more to be electrified to reduce their polluting emissions, electric axle, i.e. an axle provided with electric machines, are used.

E-axles use battery modules for their operations; such battery modules are usually placed in the proximity of the electric machines of the electric axle in order to provide energy exchange with electric machines in an efficient way.

Therefore, the presence of the electric batteries increases the encumbrance around the frame that is further limited by e-axles that are furthermore encumbering.

Accordingly, the above need to reduce the waste of space due to existing lifting systems is furthermore felt.

The aim of the present invention is to satisfy the above-mentioned needs in a compact, optimized and cost effective way.

### SUMMARY OF THE INVENTION

The aforementioned aim is reached by a suspension system and a vehicle as claimed in the appended independent claims.

Preferred embodiments of the invention are realized according to the claims dependent on or related to the above independent claim.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view showing a portion of a first embodiment of a suspension system for a heavy vehicle according to the invention;
- Figure 2 is a top view of the suspension system of Figure 1;
- Figure 3 is a lateral view of the suspension system of Figure 1;
- Figure 4 is a rear view of the suspension system of Figure 1;
- Figure 5 is a perspective view showing a portion of a second embodiment of a suspension system for a heavy vehicle according to the invention;
- Figure 6 is a lateral view of the suspension system of Figure 5;
- Figure 7 is a top view of the suspension system of Figure 5; and
- Figure 8 is a front view of the suspension system of Figure 5.

### DETAILED DESCRIPTION OF THE INVENTION

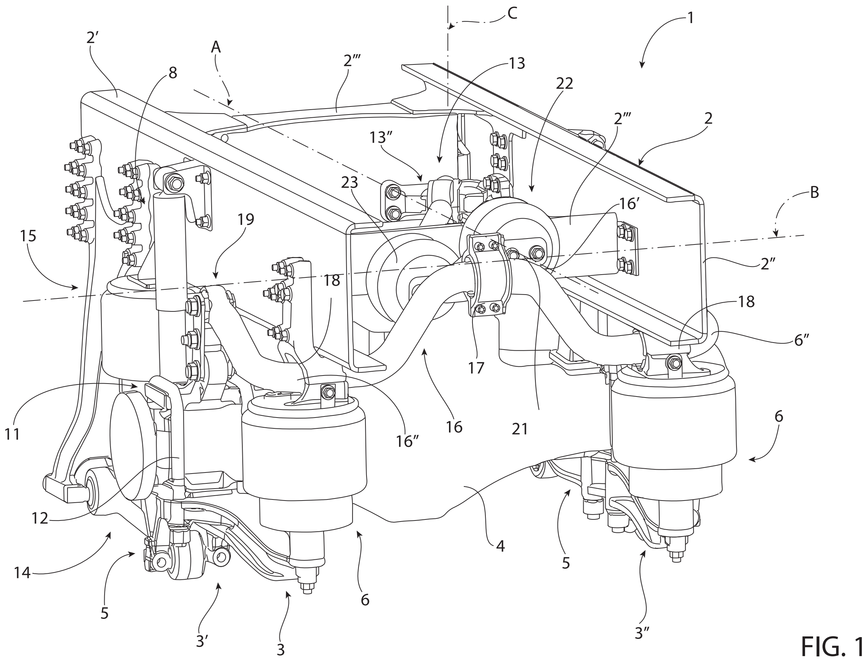

Figure 1 discloses a portion of a vehicle 1 comprising a frame 2. The frame 2 comprises, as per se known, a pair of side members 2', 2" extending along a longitudinal axis A of the vehicle 1 and transversally spaced apart along a transversal axis B with respect to longitudinal axis A.

Always as known, such side members 2', 2" are connected by at least one transversal member 2‴.

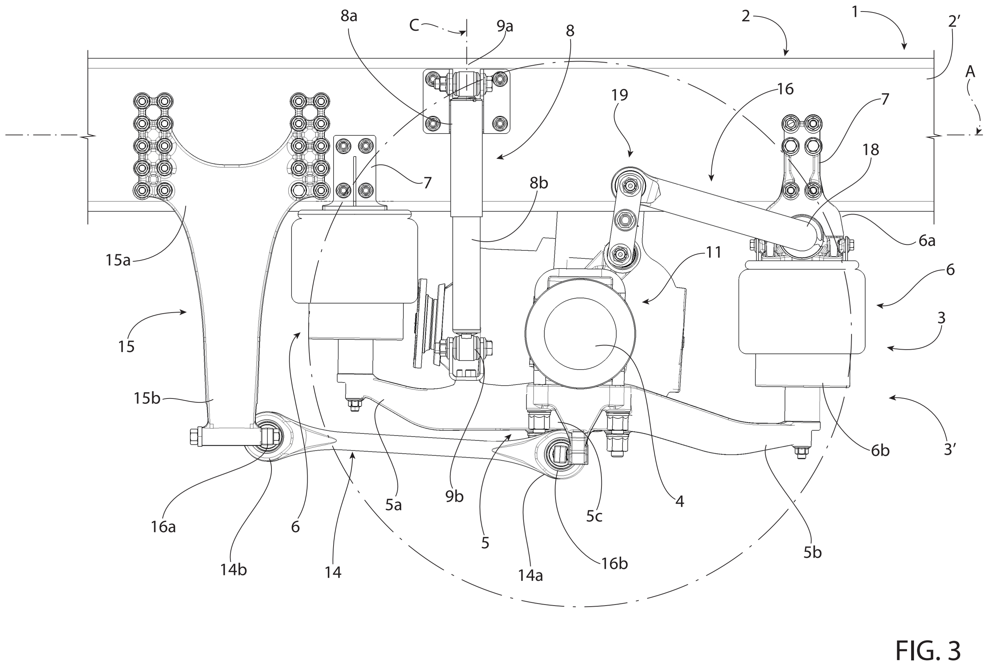

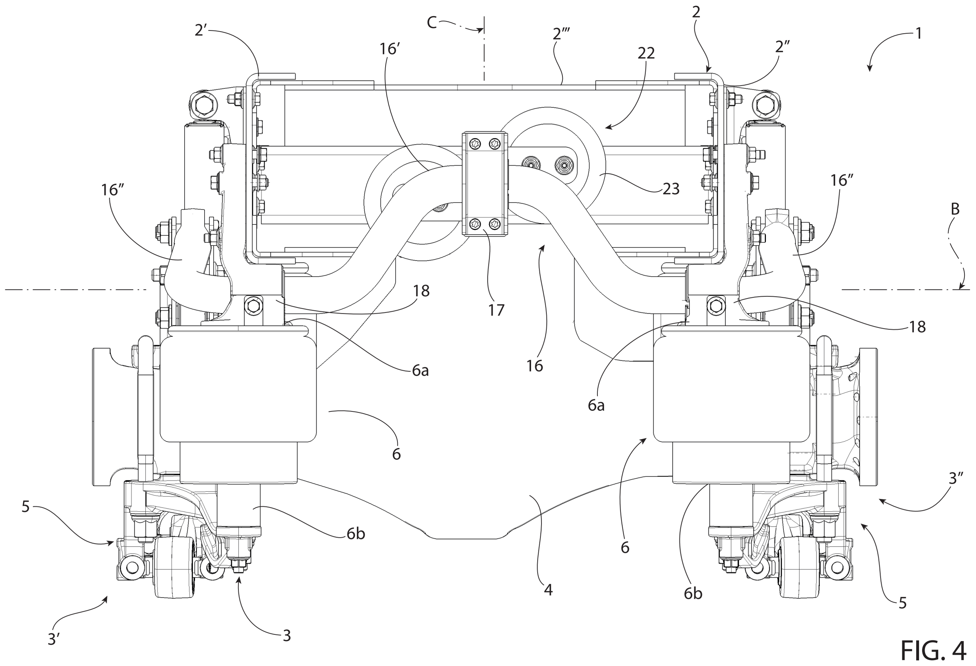

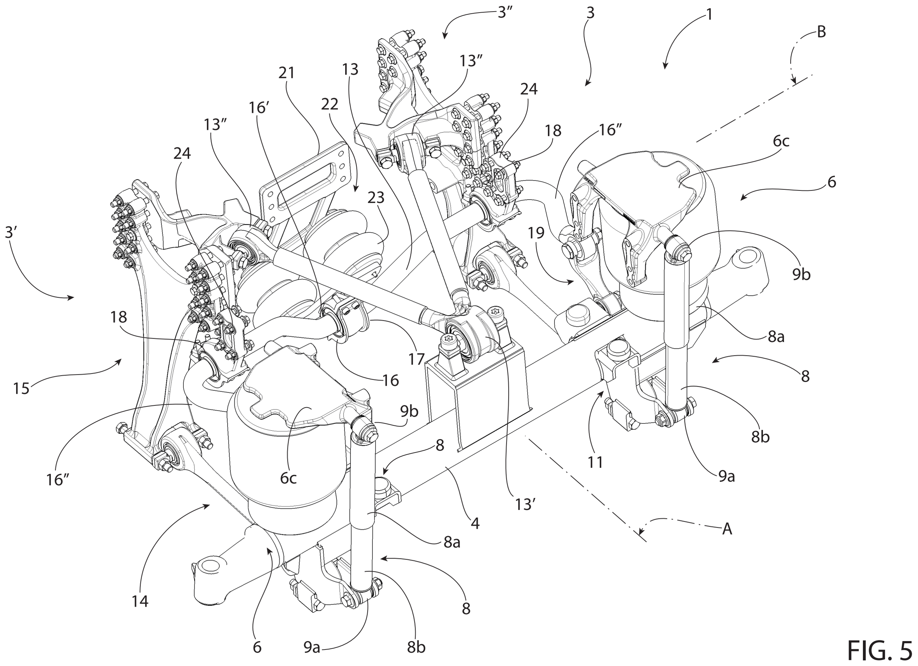

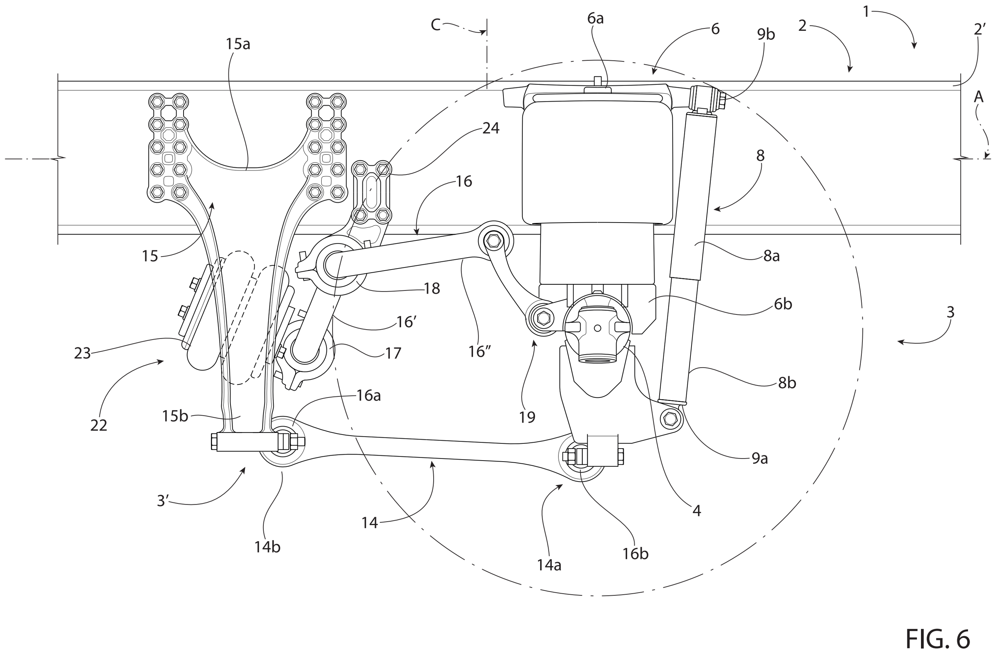

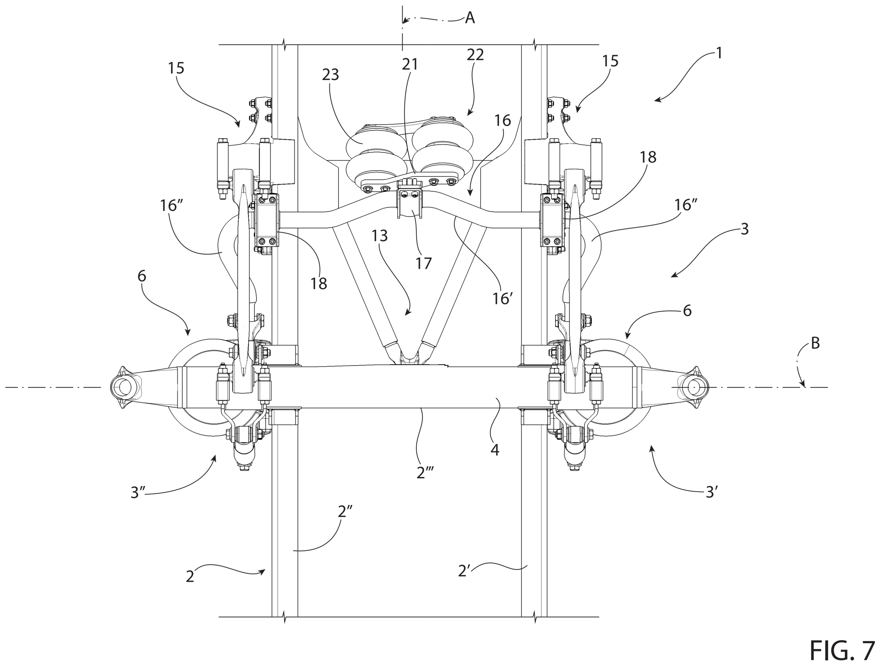

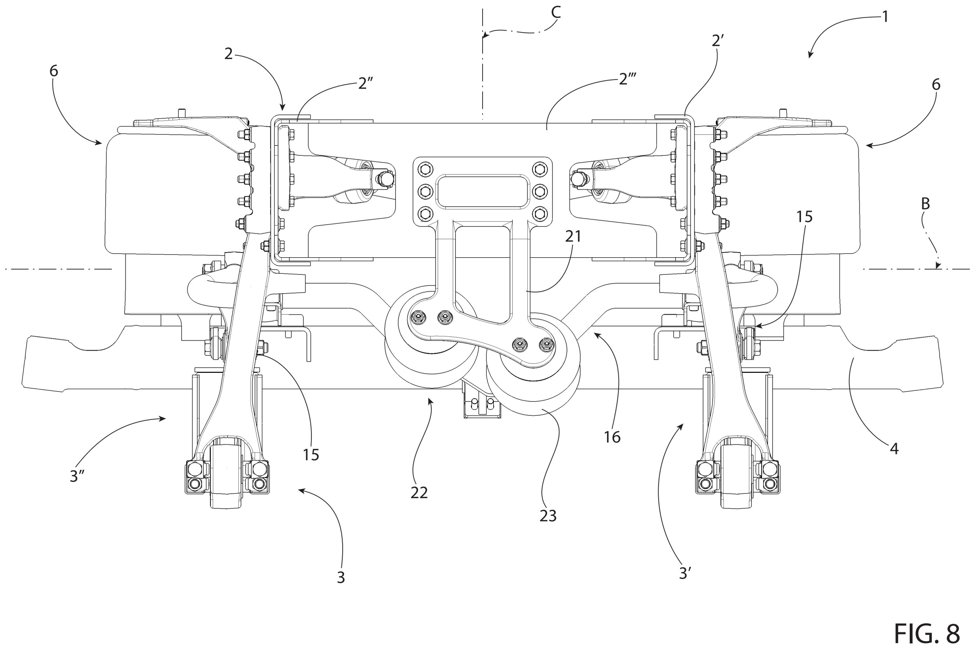

Vehicle 1 further comprises a suspension system 3 for operatively connecting an axle 4 to the frame 2. In detail, the axle 4 can be a driven axle (figures 1 to 4) or a nondriven axle (figures5 to 8).

The axle 4 can be a mechanically operated axle or an electric axle. In such case, the axle 4 is provided with electric machines that are fed by the at least one battery module (not shown) to provide torque to the wheels carried by the electric axle or to receive electric energy generated by the electric machines when the vehicle is braking.

In particular, the suspension system 3 comprises a right side 3'' and a left side 3'. Since the left side 3' and the right side 3'' are similar, in particular symmetrical with respect to longitudinal axis A, only the left side 3" will be described for sake of brevity.

In the disclosed embodiment of figure 1, suspension system 3 comprises a metallic beam 5, i.e. a spring beam, comprising a front terminal portion 5a and a rear terminal portion 5b extending along longitudinal axis A.

The metallic beam 5 is connected to axle 4, as described below, in an intermediate portion 5c longitudinally comprised between front and rear terminal portions 5a, 5b.

Each the front and rear terminal portions 5a, 5b are connected to frame 2, i.e. to the respective side member 2', 2", via spring means such as an air bellow 6 interposed in a vertical direction between the frame 2 and the metallic beam 5, i.e. along a vertical axis C perpendicular to longitudinal and transversal axes A, B.

In particular, air bellow 6 comprises an upper portion 6a configured to be connected to frame 2, e.g. via a bracket 7, and a lower portion 6b that is connected, e.g. via a threaded element, to the respective front or rear terminal portion 5a, 5b.

As per se known, each air bellow 6 comprises an air bag carried between the upper and lower portions 6a, 6b and configured to house pressurized air to dampen relative movements between such upper and lower portions 6a, 6b.

The metallic beam 5 is furthermore connected to frame 2 via a damper 8 interposed along the aforementioned vertical direction. In particular, damper 8 is substantially vertical with respect to side member 2', 2" / to ground.

Preferably, damper 8 is a hydraulic damper, i.e. a cylinder, comprising a housing 8a that is carried by side member 2', 2" and a stem 8b that is connected to the metallic beam 5.

The stem 8b is connected to metallic beam 5 in a portion comprised between the intermediate portion 5c and one between the front terminal portion 5a or the rear terminal portion 5b, as specified in the following description.

In particular, stem 8b is connected to metallic beam 5 via a hinge connection 9b configured to allow a rotation of terminal portion of stem 8b about an axis parallel to the transversal axis B.

Casing 8a is instead connected to side member 2 via a hinge connection 9a configured to allow a rotation of terminal portion of casing 8a about an axis parallel to longitudinal axis A.

The metallic beam 5 is connected to the respective axle 4 via a connection assembly 11 preferably comprising retaining means 12 configured to exert a compression force between the axle 4, the metallic beam 5 (and, in case, plate elements) so as to maintain this latter connected together by friction.

In particular, the retaining means 12 may comprises two U-shaped brackets provided with threaded terminal ends configured to pass through the intermediate portion 5c of metallic beam 5 and threaded elements configured to cooperate with such threaded terminal ends to exert the compression force between the aforementioned elements.

Suspension system 1 further comprises a transversal retaining element 13 configured to support transversal movements acting between the axle 4 and frame 2 but allowing vertical movement between these latter elements.

In particular, the transversal retaining element 13 comprises a V-shaped rod (partially shown) provided with a first arm portion and a second arm portion.

In particular, the transversal retaining element 13 comprises a V-shaped rod provided with a first arm portion portion and a second portion. The first portions are stably connected together while the second portions are spaced along transversal direction getting over from the first portion connection.

Accordingly, the first and second arm portions are inclined in a horizontal plane with respect to longitudinal axis so that each between their second portions gets closer to a respective side member 2',2". In greater detail, the first and second arm portions are symmetrical with respect to longitudinal axis A.

Advantageously, the first arm portion and the second arm portion are realized as one piece. The first portions thereof are connected to the axle 4 via a hinge connection 13' that allows the rotation of such first portions about an axis parallel to transversal axis B. More preferably, the first portions are connected to axle 4 in an upper portion thereof-

The second portions of the first arm portion and the second arm portion are connected by a respective hinge connection 13" to frame 2.

The suspension system 1 further comprises stop means configured to avoid an excessive vertical motion of the axle 4 with respect to frame 2. In particular, such stop means may comprise a flange fixedly carried by frame 2 and configured to cooperate at contact with outer surface of axle 4 when its motion exceeds a predetermined height. Further details about an embodiment of stop means can be found in patent application IT102020000025021 that is incorporated herein by reference.

Suspension system 1 further comprises a longitudinal retaining element 14 configured to support longitudinal movements acting between the axle 4 and frame 2 but allowing vertical movement between these latter elements.

In particular, longitudinal retaining element 14 comprises a rod connecting axle 4 to frame 2 via metallic beam 5. In particular, such rod connects axle 4 to a front hanger 15 fixedly carried by side member 2', 2".

In greater detail longitudinal retaining element 14 comprises a first terminal portion 14a and a second terminal portion 14b along axis A.

The first terminal portion 14b is connected to the front hanger 15 via a hinge 16a and the second terminal portion 14a is connected to metallic beam 5 via a further hinge 16b. Both hinges 16a, 16b are configured to allow a motion about an axis parallel to transversal axis B of the respective terminal portion 14a, 14b.

Front hanger 15 comprises an upper portion 15a configured to allow the fixation of the front hanger 15 to the respective side member 2', 2'' and a lower portion 15b configured to allow the connection of the rod 14 to the same.

Further details about an embodiment of such front hanger 15 can be found in patent application IT102020000025021 that is incorporated herein by reference.

The suspension system 1 further comprises a stabilizer bar 16 configured to dampen possible torque acting between the axle 4 and frame 2.

The stabilizer bar 16 comprises essentially (a substantially a central portion 16' and a pair of terminal portions 16".

In detail, in the disclosed embodiment, the central portion 16' extends along transversal axis B and terminal portions 16'' extend along longitudinal axis A starting from extremities of the central portion 16'.

In further detail, the central portion 16' has a shape that varies in height along vertical axis, in detail a shape that has a maximum height in the middle portion along transversal axis B and in particular, a curved shape such as a beveled trapezoid.

In the disclosed embodiment, the terminal portions 16" have a variable height shape, in particular a linear shape increasing its height along longitudinal axis A and getting away from central portion 16'.

In particular, the central portion is 16' is placed between side members 2', 2" and in particular the extremities are placed underneath these latter. The terminal portions 16" are preferably placed laterally adjacent to the side members 2', 2".

In detail, the torsional bar 16 is placed entirely on a side with respect to axle 4 and in particular in correspondence of one of the air bellows 6.

The central portion 16' is carried in a movable manner by frame 2, in detail by a first hinge 17 configured to support the central portion 16' in a rotatable manner, in particular allowing a rotation about an axis parallel to transversal axis B.

Moreover, the central portion 16' is further carried at its extremities by second hinges 18 configured to support the central portion in a rotatable manner, in particular allowing a rotation about an axis parallel to transversal axis B. In detail, such second hinges 18 are realized in the extremities of the central portion 16', i.e. near to the terminal portions 16".

In detail, the second hinges 18 are fixedly carried by frame 2, in further detail are fixedly carried by frame 2 under each side member 2', 2". In further detail, the second hinges 18 are integrated in the flange 7 operatively connecting the air bellow 6 to frame 2.

The terminal portions 16" are connected to the axle 4, in particular are connected to the connection assembly 11, and more preferably in a movable manner by a coupling assembly 19.

The coupling assembly 19 preferably comprises a connection element, such as a pair of plate in the present embodiment, which is connected at its extremities to the axle 4 and to the terminal portion 16" extremity by respective hinges, in particular parallel to each other and to transversal axis B.

Preferably, such connection element can be carried by the axle 4 or by an element, such as a coupling plate of the connection assembly 11.

The first hinge 17 is preferably realized in bracket 21. As better discussed hereinunder, bracket 21 is carried by frame 2, in particular by one of its transversal elements 2‴ thereof, in a movable manner.

In detail, vehicle 1 comprises a lifting system 22 for moving vertically the axle 4, thereby providing a condition in which the wheels carried by this latter engage ground and a second condition in which such wheels are lifted over the ground. The lifting system 22 is integrated in the suspension system 3, i.e. is configured to use one of the elements of the suspension system 3 to lift the axle 4.

Moreover, the suspension system 22 is configured to lift the axle 4 via torsional bar 16. In particular, suspension system 22 is configured to move torsional bar 16 by providing a force along longitudinal axis A. Furthermore, it is configured to provide a force along longitudinal axis A to the central portion 16' thereby allowing a vertical movement of the terminal portions 16" of the torsional bar 16.

In the disclosed embodiment, lifting system 22 is configured to move the bracket 21. In detail, lifting system comprises a pair of pneumatic pushers 23, configured to vary their dimension forward and rearward thereby moving bracket 21 along longitudinal axis A. Therefore, the first hinge 17 is moved accordingly along longitudinal axis A thereby cooperating with second hinges 18 to move up/down.

Such actuator system 22 is carried by frame 2 and extends/retracts along longitudinal axis its shape; in the present embodiment and carried by the transversal element 2‴, preferably at its height.

In the second embodiment of figures 5 to 8, the general structure of the suspension system is similar and the same reference numbers apply to elements having the same operational behavior.

In detail, the elastic element 5 is absent and the axle is directly support by longitudinal and transversal retaining members 13, 14, air bellows 6 and dampers 8.

In particular, the torsional bar 16 is placed entirely on a side with respect to axle 4 and in particular in on a side of the air bellow 6, in particular in correspondence of the longitudinal retaining member 14.

In such embodiment, the actuator system 22 is carried by the frame 2 underneath one of the side members 2', 2".

As shown, bracket 21 carrying the first hinge 17 is therefore placed in a similar manner by frame 2 under a side member 2', 2'' and second hinges 18 are carried by a bracket 24 under the side member 2'.

Indeed, the air bellow 6 is directly carried to the side member 2', in particular by a dedicated bracket 6c that is separated from second hinges 18.

The damper 8 is operationally interposed by the bracket 6c of the air bellow 6 and the axle 4.

Vehicle 1 can further comprise a control unit (not shown) configured to receive a request for lifting up or down the axle 4. Such a control unit may be an electronic, pneumatic or hydraulic control unit.

The control unit would associate the request to a value to transmit to element that carries the torsional bar, thereby allowing a movement that corresponds to the requested movement.

Clearly, the association can be performed by a program, e.g. by look up table, as per in an electronic control unit or by a valve means such as in a pneumatic or hydraulic control unit. The operation of the above-described suspension system 1 is the following.

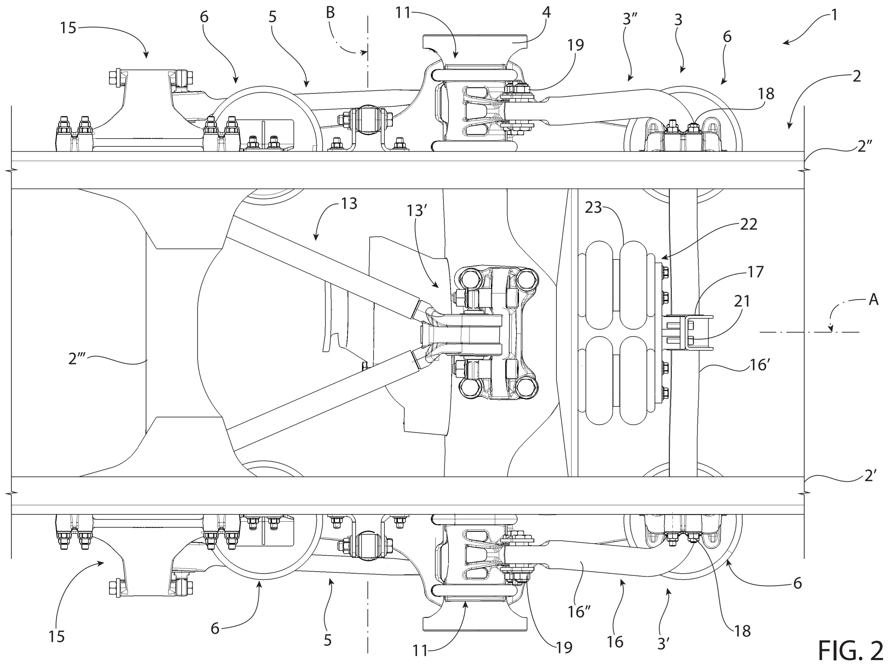

During the motion of the vehicle at least one axle 4 follows the shape of the road and may move with respect to the frame 2 of the vehicle 1. Torque is provided to the wheels via axle 4 (figure 1) or another axle not shown (as per the suspension of figure 2) by a thermal engine or an electric traction system.

Such motions are dampened by suspension system 1, in particular:
- Vertical motions are dampened by damper 8 and air springs 6. Excessive vertical motions are stopped by stop means;
- Transversal and longitudinal motions are compensated by V-rod 13 and longitudinal rod 14; and
- Torque motions are compensated by stabilizer bar 16.

In addition to the above, when needed, the axle 4 may be lifted up or down via lifting system 22. In particular, in both embodiments, the first hinge 17 is moved, thereby moving - due to shape of the torsional bar 16, the central portion 16' thereof and carrying by consequence the terminal portions 16'' of the torsional bar 16 to lift up or down according to the extension or retraction of the pushers 23.

According to the above, the present invention is furthermore related to a method comprising the following steps:
i) Acquiring a request of moving up/down an axle 4 connected by a suspension system 3;
ii) Associating the request at step i) to a movement value to be imparted to an element of the suspension system 3; and
iii) Controlling lifting system 22 to expand or retract to move said element at step ii) according to the associated movement value.

In view of the foregoing, the advantages of the above-described suspension system according to the invention are apparent.

The proposed lifting system integrated into the suspension system, i.e. moving one of the elements thereof for carrying the axle up and down allows reducing the space encumbrances.

Indeed, the fact that the lifting system directly moves one of the elements and in particular exploits a fulcrum to reduce the needed force for lifting up and down the axle, further reduces the need of a bulky lifting system.

Moreover, with proper connection means the lifting systems can be placed anywhere along chassis and different directions of actuation can be provided, thereby allowing using the spaced at their best for housing the suspension system elements or other elements such as electrical batteries.

Indeed, as demonstrated, with different configurations and dispositions, the lifting system operates in analogous way and with the same efficiency.

It is clear that modifications can be made to the described suspension system which do not extend beyond the scope of protection defined by the claims.

For example, in general, the structure of the suspension system may vary provided that it is present an element that can be used for lifting up/down the axle, preferably a torsional bar.

Moreover, the lifting system and a suspension system be provided for front or rear axles configured as a drive or a tag axle or as a standard and an electric axle.

The shown and described fixation means, hinges and connections may be varied and be substituted by equivalent means.

## Claims

1. Vehicle (1) comprising a frame (2) comprising a pair of side members (2', 2") extending along said longitudinal axis (A) and spaced along said transversal axis (B), extending along a longitudinal axis (A) direction and a transversal axis (B) direction and at least one axle (4) and a suspension system (3) for connecting said at least one axle (4) to said frame (2), said suspension system (3) comprising a plurality of elements operatively connecting said axle (4) to said frame (2), said vehicle (1) further comprising a lifting system (22) for lifting up/down said axle (4) along a vertical axis (C) direction,
said lifting system (22) being integrated into said suspension system (3),
wherein said suspension system (3) comprises a torsional bar (16), said torsional bar (16) comprising a central portion (16') and a pair of terminal portions (16") extending from said central portion (16'),
wherein said lifting system (22) comprises an actuator (23) configured to move forward/rearward along said longitudinal axis (A) torsional bar (16),
**characterized in that** said torsional bar (16) being shaped so that said lifting system (22) acting on said central portion (16') along said longitudinal axis (A) causes a vertical motion of said terminal portion (16"), said central portion (16') being connected to said frame (2), said terminal portion (16") being connected to said axle (4).

2. Vehicle according to claim 1, wherein said actuator (3) comprises a pusher.

3. Vehicle according to any of the preceding claims, said actuator is carried underneath said side members (2', 2") along said vertical axis (C).

4. Vehicle according to any of the preceding claims, wherein, said actuator is carried between said side members (2', 2") along said transversal axis (B).

5. Vehicle according to claim 4, wherein said central portion (16') is rotatably carried by a flange (21), said flange (21) being movably carried said frame (2).

6. Vehicle according to claim 4 or 5, wherein said central portion is rotatably carried by a flange (21), said flange (21) being movably carried by said frame (2) underneath this latter.

7. Vehicle according to claim 5 or 6, wherein said flange (21) is moved by said lifting system (22).

8. Vehicle according to any of claims 4 to 7, wherein said terminal portion (16") are connected by a connection system (19) to said axle (4).

9. Vehicle according to claim 8, wherein said connection system (19) at least comprises an element hinged at its extremities to an element fixed to said axle (4) and to said terminal portion (16").

10. Vehicle according to any of claims 4 to 9, wherein said central portion (16') has variable height shape along said transversal axis (B) having a maximum height in an intermediate portion thereof .

11. Vehicle according to any of claims 4 to 10, wherein said central portion (16') extends along said transversal axis (B), said terminal portion (16") extending along said longitudinal axis (A).

12. Vehicle according to any of the preceding claims, wherein said terminal portion (16") have a variable height shape along said longitudinal axis (A).

13. Vehicle according to any of the preceding claims, further comprising a control unit configured to receive a request to lift up/down said axle (4), said control unit controlling said lifting system (22) on the base of said request.

14. Method for lifting up/down an axle (4) in a vehicle according to claim 13, comprising the following steps
i) Acquiring a request of moving up/down said axle (4);
ii) Associating the request at step i) to a movement value to be imparted to an element of the suspension system (3); and
iii) Controlling lifting system (22) to expand or retract to move said element at step ii) according to the associated movement value.
